# EUROPEAN PATENT SPECIFICATION

(11) **EP 2 758 320 B1**
(45) Date of publication and mention of the grant of the patent: **20.04.2016**
(21) Application number: 12759406.7
(22) Date of filing: 05.09.2012
(51) Int. Cl.: B65D 81/24, B65D 85/26, A23C 19/16, C08L 23/08

(54) **PROCESS FOR INCREASING THE SHELF LIFE OF A FOOD OR AGRICULTURAL PRODUCT**
VERFAHREN ZUR ERHÖHUNG DER HALTBARKEIT EINES LEBENSMITTEL- ODER LANDWIRTSCHAFTLICHEN PRODUKTES
PROCÉDÉ POUR AUGMENTER LA DURÉE DE CONSERVATION D'UN ALIMENT OU D'UN PRODUIT AGRICOLE

(30) Priority: 05.09.2011 EP 11180058
(43) Date of publication of application: 30.07.2014
(73) Proprietor: DSM IP Assets B.V., 6411 TE Heerlen (NL)
(72) Inventor: HOOFT, Corstiaan Johannes, NL-6100 AC Echt (NL); FOLKERTSMA, Baukje, NL-6100 AC Echt (NL); STROEKS, Alexander Antonius Marie, NL-6100 AA Echt (NL)
(74) Representative: Arendsen, Alexander Ferdinand
(86) International application number: PCT/EP2012/067259
(87) International publication number: WO 2013/034568

(56) References cited:
- WO-A2-2009/047332
- FR-A1- 2 586 026

## Description

### Field of the invention

The present invention relates to films for use in packages for improving the shelf life of surface or mould ripened cheese varieties.

### Background of the invention

Polymeric films are products that have a wide variety of uses in various areas, among which packaging is undoubtedly one of the most important. The use of polymeric films as packaging materials is advantageous in view of numerous qualities of these products, such as e.g. low cost, ease of handling, broad variety of colors, patterns and textures, high transparency or opacity and safety.

Next to the above-mentioned properties, polymeric films may have additional desirable properties, such as low permeability to gases and vapors, which make these products extremely suitable for packages for food, feed or agricultural products.

In general, food, feed or agricultural products should remain insulated from gases and vapors existing in the outer environment. It is for instance known that oxygen gas can oxidize food, feed or agricultural products and as a consequence thereof can reduce their shelf-life and even alter their coloration. In the same way, polymeric films having a low permeability to vapors are important, since they prevent food, feed or agricultural products from losing water to the outer environment, preventing them from drying out.

There is however a disadvantage associated with packaging food, feed or agricultural products in a high barrier package. The accumulation of water vapor brings about an increase in the aerobic biologic activity in the food packaged therein, which may adversely affect the shelf-life and quality of the packaged food or agricultural product.

Several solutions have been suggested for improving storage of packaged food, feed or agricultural products and extend their shelf-life. For instance, antimicrobial substances have been added to the food, feed or agricultural product before packaging. In US 6,238,717 calcium carbonate is added to cheese which, after packaging is converted into carbonic acid and then carbon dioxide. Alternatively, it has also been suggested to use polymeric films having antimicrobial substances covalently bound thereon (see *e.g*. US 2002/0051754).

In US 5,165,947 a method is described wherein a separate sachet with a humectant material is included in the packaging material so as to absorb water within the packaging material and as a consequence thereof extend the shelf-life of packaged products.

Another solution suggested was the use of polymeric films designed to be impermeable to gases and vapors at a temperature below a given phase transition point and permeable to gases and vapors at a temperature above that point (see *e.g*. US 5,254,354). Yet another solution was found in using irradiated packaging material (see *e.g*. US 2009/0047455).

WO2009/047332 discloses a process for foil ripening of cheese.

There are several disadvantages to these prior art approaches. For example, antimicrobial substances may alter the taste and/or appearance of food, feed or agricultural products. The use of separate sachets is undesirable, as the sachets may become damaged and consequently can form a health risk to consumers. Furthermore, the specific packaging materials suggested above need additional handling or have complicated production processes and are thus undesirable from an economic point of view.

Consequently, it can be concluded that there is a severe need for suitable packaging materials for storing food, feed or agricultural products, and in particular suitable packaging materials for storing food, feed or agricultural products that improve and extend the quality and shelf-life of the products.

### Description of the invention

The present invention solves the problem by providing a packaging system comprising a packaging material that is capable of breathing at a rate that maintains a desired mix of oxygen, carbon dioxide, and water vapor inside the packaging system and thus makes the packaging system suitable for storing surface or mould ripened cheese varieties.

In an aspect the invention relates to the use of a packaging system as defined in claim 1.

The packaging material may make up all or substantially all of the packaging system for storage of the products, or may comprise only part of the total packaging system. In an embodiment the whole packaging system is made from a packaging material comprising or consisting of a thermoplastic, monolithic film and having a water vapor transmission rate of at least 10 g/m².day.atm at 10°C and 85% relative humidity and an oxygen permeability of at most 100 cc/m².day.atm at 10°C and 85% relative humidity. In other words, the packaging system consists of a packaging material comprising or consisting of a thermoplastic, monolithic film and having a water vapor transmission rate of at least 10 g/m².day.atm at 10°C and 85% relative humidity and an oxygen permeability of at most 100 cc/m².day.atm at 10°C and 85% relative humidity. In said case, the packaging system also has a water vapor transmission rate of at least 10 g/m².day.atm at 10°C and 85% relative humidity and an oxygen permeability of at most 100 cc/m².day.atm at 10°C and 85% relative humidity.

In another embodiment only part of the packaging system may be made from a packaging material comprising or consisting of a thermoplastic, monolithic film and having a water vapor transmission rate of at least 10 g/m².day.atm at 10°C and 85% relative humidity and an oxygen permeability of at most 100 cc/m².day.atm at 10°C and 85% relative humidity. In said case, the oxygen permeability of the packaging system may be different from the oxygen permeability of the packaging material. For instance, when the packaging system is used for storage of agricultural products, the oxygen permeability of the packaging material may be at most 100 cc/m².day.atm at 10°C and 85% relative humidity and the oxygen permeability of the packaging system may be at least 800 cc/m².day.atm at 10°C and 85% relative humidity, preferably at least 1000 cc/m².day.atm at 10°C and 85% relative humidity, more preferably at least 2000 cc/m².day.atm at 10°C and 85% relative humidity, most preferably at least 4000 cc/m².day.atm at 10°C and 85% relative humidity.

A packaging system comprising or consisting of a packaging material comprising or consisting of a thermoplastic, monolithic film and having a water vapor transmission rate of at least 10 g/m².day.atm at 10°C and 85% relative humidity and an oxygen permeability of at most 100 cc/m².day.atm at 10°C and 85% relative humidity can have several formats. Non-limiting examples of packaging systems according to the invention are containers, trays, boxes, bottles, cans, casks, kegs, bags, wrappings, and blisters.

For example, a packaging material comprising or consisting of a thermoplastic, monolithic film and having a water vapor transmission rate of at least 10 g/m².day.atm at 10°C and 85% relative humidity and an oxygen permeability of at most 100 cc/m².day.atm at 10°C and 85% relative humidity may be applied as a patch over a punched hole in a standard packaging system. Furthermore, the packaging material can be applied as a patch and/or label on various base formats such as for example a tray-lid, vertical form-fill-seal (VFFS) or horizontal, form fill and seal (HFFS). It can also be applied as a flat film wrapped around the product while sealing in longitudinal direction and thereafter in transversal direction (*i.e*. flow-wrap technology).

In another example, the packaging system may have the shape of a container, usually obtained by thermoforming, containing a covering layer. The covering layer can be made of a packaging material comprising or consisting of a thermoplastic, monolithic film and having a water vapor transmission rate of at least 10 g/m².day.atm at 10°C and 85% relative humidity and an oxygen permeability of at most 100 cc/m².day.atm at 10°C and 85% relative humidity. A product may be introduced into the container and the container may then be closed by, preferably hermetically, sealing a layer comprising or consisting of a thermoplastic, monolithic film that has a water vapor transmission rate of at least 10 g/m².day.atm at 10°C and 85% relative humidity and an oxygen permeability of at most 100 cc/m².day.atm at 10°C and 85% relative humidity onto the container covering the opening for receiving the product. The remaining elements of the container may be made of a standard packaging system such for instance polyolefin, polyester, polyamide, EVOH and/or PVDC.

In another embodiment the packaging system is a bag. In this embodiment, a product may be introduced into the bag and the bag may be closed by, preferably hermetically, sealing the opening for receiving the product. The bag may be produced from flat film and contain at least one seal or alternatively, the bag may be produced from a tubular film resulting in a seamless tubular casing. The packaging material may be used in automated assembly-line product packaging systems such as VFFS or HFFS. In these systems, a machine constructs plastic bags out of a flat roll of plastic film, while simultaneously filling the bags with product and sealing the filled bags. The bag may comprise or consists of a packaging material comprising or consisting of a thermoplastic, monolithic film that has a water vapor transmission rate of at least 10 g/m².day.atm at 10°C and 85% relative humidity and an oxygen permeability of at most 100 cc/m².day.atm at 10°C and 85% relative humidity.

In another embodiment the packaging system is a tray having a covering layer. The covering layer can be made of a packaging material comprising or consisting of a thermoplastic, monolithic film and having a water vapor transmission rate of at least 10 g/m².day.atm at 10°C and 85% relative humidity and an oxygen permeability of at most 100 cc/m².day.atm at 10°C and 85% relative humidity. In this embodiment, a product may be introduced into the tray and the tray may be closed by, preferably hermetically, sealing the opening for receiving the product. For instance, the packaging material may form a heat-sealed lid onto a receptacle in or on which products are disposed. The receptacle may be a tray such as a thermoformed tray or bowl, and may, for instance be formed of a standard packaging system, *e.g.* polyester, such as polyethylene terephthalate, or of polypropylene, polystyrene, or may be PVDC-coated. Sealing of the receptacle is effected by techniques well-known to those skilled in the art. Once the products to be packaged have been introduced into the receptacle, the heat-sealable film lid is placed upon the receptacle such that the heat-sealable layer of the packaging material is in contact with the receptacle, and is affixed using temperature and/or pressure using conventional techniques and equipment.

The water vapor transmission rate is measured according to ASTM E96B cup test at 10°C and 85% relative humidity on a film and the oxygen permeability is measured according to ASTM standard D3985 at 10°C and 85% relative humidity on a film using Mocon equipment. Alternatively, the water vapor transmission rate can be measured according to ASTM E96B cup test at 23°C or 38°C and 85% relative humidity on a film and the oxygen permeability is measured according to ASTM standard D3985 at 23°C and 35% relative humidity on a film using Mocon equipment.

The packaging system of the present invention provides a means for storing, shipping, protecting, displaying and/or selling products that are disposed within or partially within the packaging system. The present invention does not relate to the use of the packaging system for ripening of products such as cheese or sausages. The use of the packaging system of the present invention for the ripening of cheese differs very much from the use of the packaging system of the present invention for storage of products. During ripening, cheese changes both physically, microbiologically and chemically, *e.g*. through protein bonding, taste and texture development. The current invention is directed to the use of the packaging system of the present invention for the storage of products and is about improving the shelf-life of said products. The improvement concerns the quality of said products, the time (shelf-life) or a combination of both. In fact, the packaging system of the present invention is an aid to prevent early deterioration of the products, i.e. the products should not change their physical, microbiological and chemical properties. This is a completely different use than the use of the packaging system of the present invention for ripening a product.

The packaging system can even be used to identify the product(s) therein and provide the consumer with general information about the product. The packaging system of the present invention improves and/or extends and/or prolongs the shelf-life and/or quality of the package surface or mould ripened cheese varieties compared to the situation when the product is not packaged (*i.e*. storage without a packaging system under similar storage conditions (*e.g*. temperature, times humidity)). In other words, when surface or mould ripened cheese varieties is packaged with the packaging system of the present invention, it has a longer shelf-life than when the product is not packaged (and stored under similar storage conditions (*e.g*. temperature, time, humidity)). In addition, the packaging system of the present invention provides an improvement to prior art packaging systems in that it improves and/or extends and/or prolongs the shelf-life and/or quality of surface or mould ripened cheese varieties, compared to the situation that the product is packaged in the prior art packaging systems (and stored under similar storage conditions (*e.g*. temperature, time, humidity)). In other words, when surface or mould ripened cheese varieties is packaged with the packaging system of the present invention, it has a longer shelf-life than when the product is packaged (and stored under similar storage conditions (*e.g*. temperature, time, humidity)) in a prior art packaging system (*i.e*. a standard packaging system). When surface or mould ripened cheese varieties is packaged with the packaging system of the present invention, the quality of the product may even be improved compared to when the product is packaged (and stored under similar storage conditions (*e.g*. temperature, time, humidity)) in a prior art packaging system (*i.e.* a standard packaging system).

A "standard packaging system" as used herein is a packaging system comprising a packaging material not having the characteristics and/or properties of the packaging material comprised in the packaging system according to the present invention. In other words, a standard packaging system does not comprise a packaging material comprising or consisting of a thermoplastic, monolithic film and having a water vapour transmission rate of at least 10 g/m².day.atm at 10°C and 85% relative humidity and an oxygen permeability of at most 100 cc/m².day.atm at 10°C and 85% relative humidity.

The term "shelf-life" as used herein means a period that a product can be stored without the quality falling below a certain minimum acceptable level. The minimum acceptable level for the products of the present invention requires that the products maintain substantially the same physical, microbiological and chemical properties (*e.g*. taste, smell, colour, growth of unwanted spoilage microorganisms, texture and the like). In a preferred embodiment, products maintain substantially the same physical, microbiological and/or chemical properties for at least 1 day, preferably at least 2 days, more preferably at least 5 days, more preferably at least 7 days, more preferably at least 14 days, more preferably at least 1 months, more preferably at least 3 months, more preferably at least 6 months, most preferably at least 9 months, and in particular at least 12 months when stored at ambient temperature. The quality of the product can be determined by evaluating the organoleptic quality of the product (*i.e*. taste, odour, smell). Moreover, the physical stability (stability, texture, viscosity, hardness, pH, syneresis, staling, to name just a few), the chemical stability (lipid oxidation, discoloration, to name just a few) and the microbiological stability (*e.g.* growth or absence of growth of spoilage microorganisms) can be measured to determine the quality. Shelf-life preferably is evaluated by comparing the quality of the product before storage and after storage with a packaging system. In other words, the shelf-life of a product is extended when the organoleptic quality of the product, the physical stability of the product, the chemical stability of the product and/or the microbiological stability of the product is higher when the product is packaged in the packaging system according to the present invention than when the product is not packaged at all and/or when the product is packaged in a standard packaging system (and stored under similar storage conditions (*e.g*. temperature, time, humidity)). Shelf-life is defined herein in the context of storage, without opening or otherwise breaking the packaging system.

For present purposes, "ambient temperature" means any temperature within a range commonly occurring in the interior of warehouse or retail facilities, *e.g*. about 15°C to about 25°C. It will be understood that storage at higher temperatures can be expected to shorten shelf-life and at lower temperatures (cooled or frozen) to prolong shelf-life. The term "microbiological stability" as used herein means that the packaging systems of the present invention do not support vegetative cell growth to unacceptable levels. In other words, when the products at t=0 have a microbiological cell count of about 1,000 CFU/100 cm², the products have a microbiological cell count of less than 100,000 CFU/100 cm², preferably less than 10,000 CFU/100 cm², more preferably less than 5,000 CFU/100 cm² and particularly about or even less than 1,000 CFU/100 cm², during storage in the packaging material according to the present invention. To put it otherwise, the microbiological cell count of products stored in the packaging material according to the present invention does not increase more than thousand fold, preferably not more than five hundredfold, more preferably not more than two hundredfold, even more preferably not more than hundredfold and particularly does not increase at all or even decreases, when the products are stored for at least 1 day, preferably at least 2 days, more preferably at least 5 days, more preferably at least 7 days, more preferably at least 14 days, more preferably at least 1 months, more preferably at least 3 months, more preferably at least 6 months, most preferably at least 9 months, and in particular at least 12 months at ambient temperature. As indicated before, storage at higher temperatures can be expected to shorten shelf-life (by increasing microbiological cell count) and at lower temperatures (cooled or frozen) to prolong shelf-life (by decreasing microbiological cell count). Methods to measure organoleptic quality, chemical, physical or microbiological stability are well known to a person skilled in the art.

As used herein, a monolithic film is a film not containing holes, perforations, pores or micropores that provide a direct pathway for water molecules to flow. On the contrary, a monolithic film contains molecular level pathways for diffusion of water. A monolithic film is able to transport water molecules by molecular diffusion through the polymer matrix, using a difference in partial water pressure at both sides of the film and/or a water concentration gradient across the film as the driving force. In general, it is the hydrophilic (affinity for water) and/or hygroscopic (inherent ability to absorb moisture) nature of monolithic films that allow moisture to pass from the side with the highest relative humidity to the side with the lowest relative humidity. More specifically, monolithic films transport water molecules by an absorption-diffusion-desorption model. Firstly, water is absorbed on the side with the highest relative humidity by the hygroscopic film. The absorbed water molecules than diffuse through the bulk of the hygroscopic material and are consequently desorbed on the side with the lowest relative humidity. The process by which a porous, microporous or perforated film permeates water moisture is in contrast to monolithic films, *i.e.* perforated or (micro-) porous films allow for the physical transport of the water molecules through the holes, pores or micropores. The driving force in this case is also the difference in partial water partial pressure of both sides of the film and/or the concentration gradient of water across the film. As used herein, a monolithic film excludes perforated, porous or microporous films.

In order to be able to function in packaging, the packaging material, as a rule, must possess sufficient mechanical properties such as for example puncture resistance and tear strength. In view of this, the thickness of the packaging material is usually at least 15 µm, preferably at least 20 µm, more preferably at least 25 µm, even more preferably at least 30 µm, most preferably at least 40 µm and in particular at least 50 µm.

The water vapor transmission rate of the packaging material is at least 10 g/m².day.atm, preferably at least 20 g/m².day.atm, preferably at least 25 g/m².day.atm, preferably at least 30 g/m².day.atm, preferably at least 40 g/m².day.atm, preferably at least 45 g/m².day.atm, preferably at least 50 g/m².day.atm, preferably at least 55 g/m².day.atm, more preferably at least 60 g/m².day.atm, even more preferably at least 65 g/m².day.atm, and most preferably at least 70 g/m².day.atm. In an embodiment the water vapor transmission rate of the packaging material is at most 75 g/m².day.atm.

The oxygen permeability of the packaging material is at most 100 cc/m².day.atm, preferably, at most 75 cc/m².day.atm, more preferably, at most 50 cc/m².day.atm and most preferably at most 40 cc/m².day.atm.

The packaging material comprises or consists of a thermoplastic layer, in particular a thermoplastic, monolithic film. In one embodiment, the packaging material comprises a single thermoplastic layer. In another embodiment, the packaging material comprises two or more thermoplastic layers of different or the same composition. In all these embodiments, the surface of the layer(s) can be printed, for example for branding purposes, as known in the art. In case the packaging material comprises at least two thermoplastic layers, printing can be positioned between two thermoplastic layers. Multilayer films can be obtained by methods known in the art such as co-extrusion or lamination. In the case of printing the outer layer in reverse, the multilayer structure is usually be obtained by laminating process. Each thermoplastic layer can be a blend of several thermoplastic polymers.

Usually, the thermoplastic layer(s) or film(s) is produced from the melt by known techniques, such as for example cast-extrusion or extrusion-blowing.

The thermoplastic polymer used for the thermoplastic layer(s) or film(s) is preferably a polyamide, a polyester, a polyether, the copolymers thereof or a mixture of at least two of these thermoplastic polymers. Preferred copolymers are block copolymers. More preferably, the thermoplastic polymer used for the thermoplastic layer or film is a polyamide, a polyetherester, a polyetheramide or mixtures thereof.

Examples of suitable polyamides (PA) are aliphatic polyamides that may eventually be branched polyamides, such as *e.g.* PA6, PA46, PA66, PA6/66, PA 11, PA12; semi-aromatic polyamides such as *e.g*. MXD6, PA61/6T, PA66/6T; fully aromatic polyamides; and copolymers and blends of the listed polyamides. The effect of the invention is most favourable in compositions comprising polyamide having high amide content, such as for example PA-6 in contrast to for example PA-11 or PA-12, since these polyamides as such have higher water vapour transmission rates than PA-11 or PA-12.

Examples of suitable polyesters are polyethylene terephtalate (PET), polybutylene terephtalate (PBT), polypropylene terephtalate (PPT), polyethylene naphtanoate (PEN), polybutylene naphtanoate (PBN).

A polyetherester respectively a polyetheramide block copolymer is understood to be a copolymer containing soft blocks of a polyether and hard polyester respectively polyamide blocks.

The polyether blocks are preferably those derived from base or acid-catalyzed ring-opening polymerization of cyclic ethers such as epoxides, oxetanes, oxolanes, and the like. The polyethers have repeat units of oxyalkylene groups (-O-A-) in which A preferably has from 2 to 10 carbon atoms, more preferably 2 to 4 carbon atoms. The polyethers can have different end groups, depending upon how the polyethers are made or modified. For example, the polyether can have hydroxyl, ester, ether acid, olefinic, or amino end groups, or the like, or combinations of these. Mixtures of different types of polyethers can be used. Preferred polyethers are polyether polyols. Examples of polyether polyols include, but are not limited to, polyoxypropylene polyols, polyoxyethylene polyols, ethylene oxide-propylene oxide copolymers, polytetramethylene ether glycols, oxetane polyols, and copolymers of tetrahydrofuran and epoxides. Typically, these polyols with have average hydroxyl functionalities from about 2 to about 8. Preferred aliphatic polyether are a poly(alkylene oxide) derived from an alkylene oxide of 2-6 C-atoms, preferably 2-4 C-atoms, or combinations thereof. Examples include poly(ethylene oxide), poly(tetramethylene oxide), poly(propylene oxide) and ethylene oxide-terminated poly(propylene oxide).

Suitable polyester respectively polyamide blocks in the polyetherester respectively polyetheramide block copolymers are those defined above for the polyester, respectively, the polyamide. The hard polyesterblock is preferably built up from ethylene terephthalate or propylene terephthalate repeating units, and in particular from butylene terephthalate units. Preferred polyester blocks are PBT blocks. Preferred polyamide blocks are aliphatic polyamide blocks, preferably PA6, PA66 or PA12.

Examples and preparation of block copolyesters are for example described in Handbook of Thermoplastics, ed. O. Olabishi, Chapter 17, Marcel Dekker Inc., New York 1997, ISBN 0-8247-9797-3; in Thermoplastic Elastomers, 2nd Ed, Chapter 8, Carl Hanser Verlag (1996), ISBN 1-56990-205-4; in Encyclopedia of Polymer Science and Engineering, Vol. 12, Wiley & Sons, New York (1988), ISBN 0-471-80944, p.75-117, and the references cited therein.

The polyetherester and the polyetheramide preferably has a polyether content of at least 30 wt.%. The amount of polyetherester and/or polyetheramide in the thermoplastic film is preferably such that the ether content is at least 1 wt.%, more preferably at least 2 wt.% and even more preferably at least 4 wt.% (relative to the total amount of thermoplastic polymers in the thermoplastic film). The amount of polyetherester and/or polyetheramide in the thermoplastic film is preferably such that the ether content is at most 70 wt.% (relative to the total amount of thermoplastic polymers in the thermoplastic film).

In an embodiment the thermoplastic polymers used in the thermoplastic film may essentially consist of polyamide and polyetheramide and/or polyetherester. More preferably, the thermoplastic polymers used in the thermoplastic film consist essentially of 70 to 90 wt.% of polyamide and 10 to 30 wt.% polyetherester (relative to the total amount of thermoplastic polymers in the thermoplastic film). The polyetherester preferably has a polyether content of at least 30 wt.%.

After the product has been packaged into the packaging system, the packaging system is closed. Preferably, the closing is done by sealing. Preferably, at least the part of the packaging system that will surround the product does not contain polyolefin in substantial amounts. The amount of polyolefin (relative to the total packaging) is preferably at most 30 wt%, more preferably at most 20 wt.% and even more preferably at most 10 wt.%. Even more preferably, at least the part of the packaging system that will surround the product does not contain polyolefin.

One of the important properties for a film used for packing products is the seal ability of the material. The fundamental principles in heat sealing are to provide heat at the interfaces, pressure to bring them intimately in contact, and complete a weld, all within an acceptable period of time. When heat is applied, the thermoplastics melt and act like a glue in effecting a seal. Too much heat cannot usually be applied directly to unsupported films, because they melt and stick to the surface of the sealing bar (bar sealing is the most widely used method for sealing). In that case the seal area is destroyed in the process and for that reason such materials better be sealed by impuls sealing. Another solution is applying a dedicated seal layer at the inside of the film, that needs less heat load to effect a seal. Examples of such dedicated layers are a polyolefin layer (being a water barrier) or a dedicated coating (being water permeable). In case a polyolefin layer is used for sealing purpose, the part of the packaging that will surround the product preferably does not comprise such layer.

In an embodiment the packaging system is tightly covering the surface of the product in order to prevent that air is present between the product and the packaging system in order to prevent or reduce the undesirable formation of moulds. In view of this, the packaging system may be heat shrinkable and/or the process further comprises vacuumizing prior to closing the packaging. Such vacuumizing is known in the art and is for examples described in The Wiley Encyclopedia of Packaging Technology, Aaron L. Brody, Kenneth S. marsh - 2nd ed., ISBN 0-471-06397-5, p 949-955. Vacuumizing may be performed at a pressure of 0.5-100 mbar. Vacuumizing is advantageous as it excludes oxygen and by that reduces the conditions for mould growth. Alternatively, Modified Atmosphere Packaging (MAP) may be used. In this preservation technique the air surrounding the food in the package is changed to another composition. This way the initial fresh state of the product may be further prolonged. MAP can be used with various types of products. The mixture of gases in the package depends on the type of product, packaging systems and storage temperature. The initial flushed gas-mixture will be maintained inside the MA package. Among fresh-cut products equilibrium modified atmosphere packaging (EMAP) is the most commonly used packaging technology. When packaging vegetables and fruits the gas atmosphere of package is not air (O₂ 21%; CO₂ 0.038%; N₂ 78%), but consists usually of a lowered level of O₂ and a heightened level of CO₂. There are two techniques generally used in the industry to pack products namely gas-flushing and compensated vacuum. In gas-flushing the package is flushed with a desired gas mixture, as in compensated vacuum the air is removed totally and the desired gas mixture then inserted.

In order to further prevent or reduce the undesirable formation of pathogenic microorganisms such as fungi and bacteria, the product can be treated with a composition comprising an antimicrobial compound such as for example natamycin and/or nisin prior to introduction into the package. Obviously, also more than one antimicrobial compound may be used. Such treating can be done by immersing, spraying, dipping, watering, drenching, vaporizing, atomizing, fogging, fumigating, painting, brushing, dusting, foaming, spreading-on and coating, to name just a few.

Alternatively, the packaging system and/or packaging material as described herein may comprise or consist of a thermoplastic film coated with an antimicrobial composition comprising a binding agent and at least one antimicrobial compound. The composition may comprise more than one antimicrobial compound. After packaging, the binding agent swells, softens or dissolves in the water that is released from the product. Optionally, the antimicrobial composition might become part of a water phase that is present between the outer surface of the product and the packaging system and/or packaging material. Optionally, the antimicrobial compound is able to migrate in the water phase. Optionally, the antimicrobial compound is transferred to the outer surface of the product. As such, contact between the outer surface of the product and the antimicrobial composition is maximized. It is to be noted that the coated antimicrobial composition may or may not exist solely as a surface coating. For example, a part of the antimicrobial composition may penetrate the structure of the thermoplastic film. Alternatively, the thermoplastic film prevents impregnation of the antimicrobial composition, for example obtained by corona treating the thermoplastic film prior to providing the antimicrobial composition to the film. Accordingly, as used herein, the term coating is to be understood to mean that the film wall is not impregnated with the antimicrobial composition, but only has the antimicrobial composition on the surface thereof, but the term may also apply that the film is impregnated with a part of the antimicrobial composition. In an embodiment the antimicrobial composition comprises an antifungal compound such as natamycin or a functional derivative thereof. Any type of natamycin may be used, preferred types of natamycin are micronized particles of natamycin such as for example described in WO 08/110626 and natamycin comprising needle shaped crystals such as for example described in WO 06/045831.

The antimicrobial composition further comprises a binding agent. For the purposes of the present invention, the binding agent will be effective to adhere the antimicrobial composition to the thermoplastic film such that the surface of the film is coated with the antimicrobial composition. The binding agent will also be effective to keep the antimicrobial compound adhered to the packaging system and/or packaging material before application on the product. Furthermore, the binding agent will be effective to make the antimicrobial composition becoming part of the water phase that might become present between the outer product surface and the packaging system and/or packaging material; and to make the antimicrobial compound being able to migrate in the water phase.

The binding agent is preferably selected from the group of a polymer, a protein, a polysaccharide, or a mixture thereof.

In one preferred embodiment, the binding agent is a polymer, preferably polyethylene glycol or polyvinyl alcohol or a mixture of at least two of these polymers. Preferably, polyvinyl alcohol is used as binding agent as this may result in that a higher amount of antimicrobial compounds can be provided in the packaging system and/or packaging material. More preferably, polyvinyl alcohol with ultra low, low or middle molecular weight Mw is used. Preferably the viscosity of the polyvinyl alcohol is at least 3 mPa.s, more preferably at least 4 mPa.s. Preferably the viscosity of the polyvinyl alcohol is at most 30 mPa.s, more preferably at most 22 mPa.s. Preferably polyvinyl alcohol with a hydrolysis degree of between 88 and 98 % is used as binding agent. In this embodiment, the antimicrobial composition preferably further comprises a thickening agent to increase the viscosity of the antimicrobial composition. Suitable thickening agents include, but are not limited to, agar, alginic acid, alginate, xanthan gum, carrageenan, gellan gum, guar gum, acetylated distarch adipate, acetylated oxidised starch, arabinogalactan, ethyl cellulose, methyl cellulose, locust bean gum, starch sodium octenylsuccinate, and triethyl citrate. A preferred thickening agent is xanthan gum.

In another preferred embodiment, the binding agent is a protein, a polysaccharide, or a mixture thereof. More preferably, the antimicrobial composition comprises a polysaccharide, even more preferably a cellulose derivative as binding agent. The cellulose derivative is preferably a cellulose ether, more preferably methyl hydroxyethyl cellulose, hydroxypropyl methyl cellulose or a mixture thereof. Even more preferably the cellulose derivative is methyl hydroxyethyl cellulose.

The antimicrobial composition present in the packaging system and/or packaging material preferably comprises a binding agent in an amount of from 99,999 wt% up to 60 wt% and an antimicrobial compound in an amount from 0.001 wt% and 40 wt%, based on the weight of the total composition. The amount in which the antimicrobial compound is applied depends upon its type.

The antimicrobial composition may further comprise at least one additional compound selected from the group consisting of a sticking agent, a surfactant, an emulsifier, a detergent, a preservative, a stabilizer, a spreading agent, an antioxidant, an anti-foam-forming agent, a wetting agent, a further antimicrobial agent, a filler, a spray oil, a dispersing agent, and a flow additive.

The antimicrobial composition applied to the thermoplastic film is preferably liquid, more preferably the antimicrobial composition is an aqueous composition, in particular an aqueous solution or suspension.

The antimicrobial composition preferably has a viscosity higher than 50 mPa.s, more preferably higher than 100 mPa.s (measured at Physica UDS; spindle Z3, shear rate: 14.4 1/s, temperature = 22-23°C) and a viscosity lower than 460 mPa.s, more preferably lower than 450 mPa.s. It has been found that a viscosity of between 50 mPa.s and 460 mPa.s results in that the antimicrobial composition can advantageously be coated on the thermoplastic film. The coated film may further comprise a tie layer between the thermoplastic film and the coating. The antimicrobial composition can be applied onto the polymeric substrate layer by any method know in the art, for example by means of extrusion coating, spraying, spreading, dipping, immersing, painting or printing. In a particularly simple process, the coating is applied to a flat thermoplastic substrate layer with the aid of a coating roller.

The packaging system may have dimensions corresponding to the dimensions of the product to be packaged. Alternatively, the dimensions may also be different from the dimensions of the product.

After packaging, the product may be stored under suitable conditions. Storage conditions depend on the type of product and its use.

Below is shown a series of examples not covered by the scope of the appended claims.

### EXAMPLES

### Example 1

### Storage of mushrooms

Fresh white mushrooms were cut in slices and 70-80 grams of mushroom slices were packed in different packaging materials (see Table 1). The slices were packed by a Multivac R245 thermoform machine by application of thermoform technology. The machine settings were regular and known to a person skilled in the art. Next, atmospheric gas was added to the mushroom slices and the packaging materials were tightly sealed leaving the atmospheric gas as a headspace. Optionally, the lidding film of the packaging materials was perforated with 4 small holes by pushing a needle through the film for additional respiration of the mushroom slices.

After packaging, the mushroom slices were stored for 28 days at 4.4°C and a relative humidity of 83.5%. During storage, the respective packaging materials were evaluated visually on formation of water drops on their interior surface (0 = no water drops; 1 = less than 25% of interior surface covered with water drops; 2 = between 25 and 75% of interior surface covered with water drops; and 3 = more than 75% of interior surface covered with water drops) and on formation of brown spots on the mushroom slices (0 = no browning; 1 = less than 25% of mushrooms showing browning; 2 = between 25 and 75% of mushrooms showing browning; and 3 = more than 75% of mushrooms showing browning).

The results are shown in Table 2. The results demonstrate that the mushroom slices packed in the packaging material according to the invention showed no water drop formation on the interior surface of the packaging material even after 28 days of storage, while the mushroom slices packed in the standard packaging material (non-perforated as well as perforated) showed water drop formation already after 2 days of storage.

Moreover, the results demonstrate that less than 25% of the mushroom slices packed in the packaging material according to the present invention started to show brown spots after 16 days of storage, while mushroom slices packed in standard packaging material (perforated as well as non-perforated) started to show brown spots already after 2 days of storage. After 16 days of storage, more than 75% of the mushroom slices packed in standard packaging material (perforated as well as non-perforated) showed browning.

The results clearly show that the packaging material according to the present invention is more suitable for use of storage of products such as agricultural products e.g. mushrooms than standard packaging materials. The mushrooms packed in the packaging material according to the invention have no moisture (i.e. water drop) formation on the interior surface of the packaging material during storage and the mushrooms kept their white color for a much longer time.

### Example 2

### Storage of broccoli

Fresh broccoli was cut in pieces and 70-80 grams of broccoli pieces were packed in packaging material 1 or packaging material 3 (see Table 1). The pieces were packed by a Multivac R245 thermoform machine by application of thermoform technology. The machine settings were regular and known to a person skilled in the art. Next, atmospheric gas was added to the broccoli pieces and the packaging materials were tightly sealed leaving the atmospheric gas as a headspace. For packaging material 3, the lidding film of the packaging material was perforated with 4 small holes by pushing a needle through the film for additional respiration of the broccoli pieces.

After packaging, the broccoli pieces were stored for 28 days at 4.4°C and a relative humidity of 83.5%. During storage, the respective packaging materials were evaluated visually on formation of water drops on their interior surface (0 = no water drops; 1 = less than 25% of interior surface covered with water drops; 2 = between 25 and 75% of interior surface covered with water drops; and 3 = more than 75% of interior surface covered with water drops) and on formation of brown spots on the broccoli pieces (0 = no browning; 1 = less than 25% of broccoli pieces showing browning; 2 = between 25 and 75% of broccoli pieces showing browning; and 3 = more than 75% of broccoli pieces showing browning).

The results are shown in Table 3. The results demonstrate that the broccoli pieces packed in the packaging material according to the invention showed no water drop formation on the interior surface of the packaging material even after 28 days of storage, while the broccoli pieces packed in the perforated standard packaging material showed water drop formation already after 7 days of storage.

Moreover, the results demonstrate that less than 25% of the broccoli pieces packed in the packaging material according to the present invention started to show brown spots after 21 days of storage, while broccoli pieces packed in the perforated standard packaging material started to show brown spots already after 9 days of storage. After 21 days of storage, between 25 and 75% of the broccoli pieces packed in the perforated standard packaging material showed browning.

The results clearly show that the packaging material according to the present invention is more suitable for use of storage of products such as agricultural products e.g. broccoli than standard packaging materials. The broccoli packed in the packaging material according to the invention has no moisture (i.e. water drop) formation on the interior surface of the packaging material during storage and the broccoli kept its green color for a much longer time.

### Example 3

### Storage of Comte cheese

Whole Comte cheese at age was bought from the market and cut in wedge shaped pieces. The pieces were packed in various packaging materials (see Table 4). The pieces were packed by a Multivac R245 thermoform machine by application of thermoform technology. The machine settings were regular and known to a person skilled in the art. Part of the pieces were packed by application of a modified atmosphere prior to tight sealing of the packaging material (packaging materials 1 and 2), while the other part of the pieces were packed while applying a vacuum prior to tight sealing of the packaging material (packaging materials 3 and 4). The modified atmosphere existed of 30% CO₂ and 70% N₂.

After packaging, the Comte pieces were stored for 56 days at 4.4°C and a relative humidity of 83.5%. Before and after storage for 56 days, the Comte pieces were evaluated on hardness of the cheese. For this, a Texture Analyzer TA.XTplus of Stable Micro Systems with a P1 SP spherical probe and a 5 kg load cell was used. The probe having a 1 cm cross section was driven into the cheese surface at a speed of 1 mm/s. The hardness was measured at 1 mm below the surface and is in fact the resistance to the speed (measured in grams).

The results are shown in Table 5. The results demonstrate that the packaging materials according to the invention (i.e. packaging materials 1 and 3) released sufficient moisture during storage to keep the crust of the cheeses fresh and dry. The crust of the cheeses packed in the standard packaging materials (i.e. packaging materials 2 and 4) became soft and slimy during storage.

The results clearly show that the packaging material according to the present invention is more suitable for use of storage of products such as food products e.g. cheese than standard packaging materials. The cheese packed in the packaging material according to the invention has a similar hardness as before storage and does not get soft and slimy such as the cheese packed in the standard packaging materials.

### Example 4

### Storage of Kernhem cheese

Whole Kernhem cheese at age was bought from the market and cut in wedge shaped pieces. The pieces were packed in packaging materials numbers 1 and 2 (see Table 4). The pieces were packed by a Multivac R245 thermoform machine by application of thermoform technology. The machine settings were regular and known to a person skilled in the art. The pieces were packed by application of a modified atmosphere prior to tight sealing of the packaging material. The modified atmosphere existed of 30% CO₂ and 70% N₂.

After packaging, the Comte pieces were stored for 56 days at 4.4°C and a relative humidity of 83.5%. Before and after storage for 56 days, the Comte pieces were evaluated on hardness of the cheese. For this, a Texture Analyzer TA.XTplus of Stable Micro Systems with a P1 SP spherical probe and a 5 kg load cell was used. The probe having a 1 cm cross section was driven into the cheese surface at a speed of 1 mm/s. The hardness was measured at 1 mm below the surface and is in fact the resistance to the speed (measured in grams).

The results are shown in Table 6. The results demonstrate that the packaging materials according to the invention (i.e. packaging material 1) released sufficient moisture during storage to keep the crust of the cheeses fresh and dry. The crust of the cheeses packed in the standard packaging materials (i.e. packaging material 2) became soft and slimy during storage.

The results clearly show that the packaging material according to the present invention is more suitable for use of storage of products such as food products e.g. cheese than standard packaging materials. The cheese packed in the packaging material according to the invention has a similar hardness as before storage and does not get soft and slimy such as the cheese packed in the standard packaging material.

### Example 5

### Storage of Gouda cheese

Ripened Gouda 48+ cheeses were produced at DSM Food Innovation Center in Delft. All cheeses were produced from the same milk and brined in the same brine bath. Therefore, composition as well as initial microbial contamination of the cheeses was identical. The cheeses were of the so-called block shape and measured about 50 x 30 x 11 cm and weighed about 15 kg each. The cheeses were packed in different packaging materials (see Table 7). The packaging materials used for the experiment were bags designed for cheeses of a width of 30 cm.

The reference packaging material (packaging material 1 in Table 7) was bought from Paardekoper, a trader in packaging materials in Oud-Beijerland (The Netherlands) (article number 157406). The packaging material according to the invention (packaging material 2 in Table 7) has been produced by DSM with by the industry known conditions at a blown film line.

The aim of the experiment was to compare the quality of cheese packaged in different packaging materials while having the same storage conditions. Four cheeses were packaged in packaging material 1 and four cheeses were packaged in packaging material 2.

For vacuumizing and sealing the packaging material, a Möllervac 500 chamber vacuum machine was used. Vacuum conditions were set at 30 mbar. Induction sealing for the reference packaging material and the packaging material according to he present invention was set at 2.2 - 2.5 seconds.

After packaging, vacuumizing and closing the packaging material by sealing, storage of the cheeses was realized in a conditioned storage room where the conditions were set at 10°C and 85% RH.

During storage of the cheeses, the development of yeast and lactobacilli was monitored on the surface of the cheeses. Samples were taken after 0, 2, 4 and 6 weeks of storage. The method for monitoring development of yeast and fungi and lactobacilli, was the so-called surface swab method. For this, a cheese slicer was sterilized using alcohol and a flame. The cheese slicer was cooled on the surface by taken a slice which was discarded for analysis. The next slice, measuring approximately 5 by 10 cm cheese was immediately placed in a sterile Stomacher bag, cooled and microbial cells were detected by the respective detection method (see below). By sampling a cheese this way, the microbial cells on the surface can be expressed as colony forming units per 100 cm². The detection level was 100 cfu/100 cm². The surface swab method was done for all stored cheeses.

The detection of the lactobacilli content was determined according to the standard NEN 6815:2001, revised in 2009. This standard method uses Rogosa agar as the preferred selective medium, although some laboratories may also choose to use Tomato Juice Agar. In our case Rogosa agar was used. Dilutions were made of the emulsified cheese sample in suitable diluent, a physiological salt solution and those dilutions yielding a count between 10 and 300 colony forming units (cfu) were plated out. The plates were then placed in an incubator at 30°C for 5 days after which the cfu was counted and expressed as cfu/g or cfu/100 cm² of cheese, depending on the sample preparation. The sampling technique used in the present experiment allowed expressing the found colony forming units to be found on 100 cm2 of the surface of the cheese. The detection level was 100 cfu/100 cm².

Yeast and fungi on the surface of the cheese were detected using the international ISO6611/IDF94 standard from 2004. This is a colony count technique at 25°C. The selectiveness of the media used in this standard was due to the addition of oxytetracycline which was added to a base medium consisting of yeast extract, dextrose, agar and water. The aimed for selectiveness can also be achieved by addition of cloramphenicol, but oxytertacycline was used in the present detection method. As for the detection of the lactobacilli, dilutions were made of the emulsified cheese sample and suitable dilutions were plated out. The incubation of the inverted plates was done at 25°C for 5 days after which the cfu was counted and expressed as cfu/g or cfu/100 cm², depending on the sample technique. The sampling technique used in the present experiment allowed expressing the found colony forming units to be found on 100 cm² of the surface of the cheese.

The results are shown in Table 8. The results clearly show that products stored for 0 to 6 weeks in packaging material according to the present invention (*i.e.* packaging material 2 in Table 2) have significantly reduced levels of both for the yeast and fungi counts as well as for the lactobacilli counts compared to products stored for 0 to 6 weeks in standard packaging material (*i.e.* packaging material 1 in Table 2). In view of the increased microbiological stability of the products packaged in the packaging material according to the present invention, it can be concluded that the shelf-life of products packaged in packaging material according to the present invention is extended compared to products packaged in standard packaging material.

**Table 1: Packaging materials used in Examples 1 and 2.**

| Packaging material number | Part of the packaging material | Material | Oxygen transmission rate (ASTM D3985 at 23°C and 35% RH) in cc/m².day.atm | Water vapor transmission rate (ASTM E96B cup test at 38°C and 85% RH) in g/m².day.atm | Water vapor transmission rate (RH DIN 53122 at 23°C and 85% RH) in g/m².day.atm |
|---|---|---|---|---|---|
| 1 | Top (lidding) | Packaging material according to the invention | ≤ 35 | 280 | - |
| | Bottom | Packaging material according to the invention | ≤ 35 | 280 | - |
| 2 | Top (lidding non-perforated) | MF GVA 70 µm (standard packaging material) | ≤ 3 | - | < 4 |
| | Bottom | MF GVA 90 µm (standard packaging material) | ≤ 4 | - | < 2 |
| 3 | Top (lidding perforated with 4 holes) | MF GVA 70 µm (standard packaging material) | ≤ 3 | - | < 4 |
| | Bottom | MF GVA 90 µm (standard packaging material) | ≤ 4 | - | < 2 |

**Table 2: Water drop formation on interior of surface of packaging material and brown spot formation on mushroom slices during storage of mushroom slices in different packaging materials.**

| Storage (in days) | Packaging material 1 | | Packaging material 2 | | Packaging material 3 | |
|---|---|---|---|---|---|---|
| | Moisture¹ | Browning² | Moisture¹ | Browning² | Moisture¹ | Browning² |
| 0 | 0 | 0 | 0 | 0 | 0 | 0 |
| 2 | 0 | 0 | 2 | 1 | 1 | 1 |
| 7 | 0 | 0 | 3 | 1 | 1 | 1 |
| 9 | 0 | 0 | 3 | 2 | 2 | 2 |
| 14 | 0 | 0 | 3 | 2 | 2 | 2 |
| 16 | 0 | 1 | 3 | 3 | 3 | 3 |
| 21 | 0 | 1 | 3 | 3 | 3 | 3 |
| 23 | 0 | 1 | 3 | 3 | 3 | 3 |
| 28 | 0 | 1 | 3 | 3 | 3 | 3 |

| | | | | | | |
|---|---|---|---|---|---|---|
| ¹0 = no water drops; 1 = less than 25% of interior surface covered with water drops; 2 = between 25 and 75% of interior surface covered with water drops; and 3 = more than 75% of interior surface covered with water drops ²0 = no browning; 1 = less than 25% of mushrooms showing browning; 2 = between 25 and 75% of mushrooms showing browning; and 3 = more than 75% of mushrooms showing browning | | | | | | |

**Table 3: Water drop formation on interior of surface of packaging material and brown spot formation on broccoli pieces during storage of broccoli pieces in different packaging materials.**

| Storage (in days) | Packaging material 1 | | Packaging material 3 | |
|---|---|---|---|---|
| | Moisture¹ | Browning² | Moisture¹ | Browning² |
| 0 | 0 | 0 | 0 | 0 |
| 2 | 0 | 0 | 0 | 0 |
| 7 | 0 | 0 | 1 | 0 |
| 9 | 0 | 0 | 1 | 1 |
| 14 | 0 | 0 | 2 | 1 |
| 16 | 0 | 0 | 2 | 1 |
| 21 | 0 | 1 | 2 | 2 |
| 23 | 0 | 2 | 2 | 2 |
| 28 | 0 | 2 | 2 | 2 |

| | | | | |
|---|---|---|---|---|
| ¹0 = no water drops; 1 = less than 25% of interior surface covered with water drops; 2 = between 25 and 75% of interior surface covered with water drops; and 3 = more than 75% of interior surface covered with water drops ²0 = no browning; 1 = less than 25% of broccoli pieces showing browning; 2 = between 25 and 75% of broccoli pieces showing browning; and 3 = more than 75% of broccoli pieces showing browning | | | | |

**Table 4: Packaging materials used in Examples 3 and 4.**

| Packaging material number | Part of the packaging material | Material | Oxygen transmission rate (ASTM D3985 at 23°C and 35% RH) in cc/m².day.atm | Water vapor transmission rate (ASTM E96B cup test at 38°C and 85% RH) in g/m².day.atm | Water vapor transmission rate (RH DIN 53122 at 23°C and 85% RH) in g/m².day.atm |
|---|---|---|---|---|---|
| 1 | Top (lidding) | Packaging material according to the invention | ≤ 35 | 280 | - |
| | Bottom | Packaging material according to the invention | ≤ 35 | 280 | - |
| 2 | Top (lidding) | MF GVA 70 µm (standard packaging material) | ≤ 3 | - | < 4 |
| | Bottom | MF GVA 90 µm (standard packaging material) | ≤ 4 | - | < 2 |
| 3 | Top (lidding) | Packaging material according to the invention | ≤ 35 | 280 | |
| | Bottom | Packaging material according to the invention | ≤ 35 | 280 | |
| 4 | Top (lidding) | MF GVA 85µm (standard packaging material) | ≤ 28 | - | < 3 |
| | Bottom | MF GVA 85µm (standard packaging material) | ≤ 28 | - | < 3 |

**Table 5: Hardness of Comte cheese before and after storage in different packaging materials.**

| Packaging material number | Hardness in grams before storage | Hardness in grams after 56 days of storage |
|---|---|---|
| 1 | 1492 | 1985 |
| 2 | 1492 | 733 |
| 3 | 1492 | 1242 |
| 4 | 1492 | 858 |

**Table 6: Hardness of Kernhem cheese before and after storage in different packaging materials.**

| Packaging material number | Hardness in grams before storage | Hardness in grams after 56 days of storage |
|---|---|---|
| 1 | 1956 | 2366 |
| 2 | 1956 | 427 |

**Table 7: Packaging materials used in Example 5.**

| Packaging material number | Material | | Oxygen transmission rate (ASTM D3985 at 10°C and 85% RH) in cc/m².day.atm | Water vapor transmission rate (ASTM E96B cup test at 10°C and 85% RH) in g/m².day.atm |
|---|---|---|---|---|
| 1 | Reference vacuum bag, Polyamide/ Polyethylene (20µ/80µ) (Comparative Experiments) | 100 µm | 25 | < 1 |
| 2 | Packaging material according to the invention | 50 µm | 28 | 17 |

**Table 8: Amount of yeasts and lactobacilli in stored cheeses packaged with different packaging materials.**

| | Storage time (in weeks) | Yeast amount (in cfu/100 cm²) | Lactobacilli amount (in cfu/100 cm²) |
|---|---|---|---|
| Packaging material 1 | 0 | <100 | <100 |
| Packaging material 2 | 0 | <100 | <100 |
| Packaging material 1 | 2 | 14000 | 250000 |
| Packaging material 2 | 2 | 4200 | 680 |
| Packaging material 1 | 4 | <100 | 1700 |
| Packaging material 2 | 4 | <100 | <100 |
| Packaging material 1 | 6 | <100 | 300000 |
| Packaging material 2 | 6 | <100 | <100 |

## Claims

1. Use of a packaging system comprising a packaging material, said packaging material comprising a thermoplastic, monolithic film and having a water vapor transmission rate of at least 10 g/m².day.atm at 10°C and 85% relative humidity and an oxygen permeability of at most 100 cc/m².day.atm at 10°C and 85% relative humidity for improving the shelf life of surface or mould ripened cheese varieties.

2. Use according to claim 1, **characterized in that** the packaging material has a water vapor transmission rate of at least 30 g/m².day.atm at 10°C and 85% relative humidity.

3. Use according to claim 1 or 2, **characterized in that** the packaging material has a water vapor transmission rate of at most 75 g/m².day.atm at 10°C and 85% relative humidity.

4. Use according to any one of the claims 1 to 3, **characterized in that** the packaging material has an oxygen permeability of at most 75 cc/m².day.atm at 10°C and 85% relative humidity.

5. Use according to any one of the claims 1 to 4, **characterized in that** the packaging material has an oxygen permeability of at most 40 cc/m².day.atm at 10°C and 85% relative humidity.

6. Use according to any one of the claims 1 to 5, **characterized in that** the thermoplastic polymers in the thermoplastic film consist essentially of polyamide and polyetherester and/or polyetheramide.

7. Use according to claim 6, **characterized in that** the ether content in the thermoplastic film is at least 1 wt.% (relative to the total amount of thermoplastic polymers in the thermoplastic film).

8. Use according to any one of the claims 1 to 7, **characterized in that** the packaging material is a bag, a covering layer of container or a tray, a patch, a label, a flow wrap format.

9. Use according to any one of the claims 1 to 8, **characterized in that** the thickness of the packaging material is at least 15 µm.

## Patentansprüche

1. Verwendung eines Verpackungssystems, das ein Verpackungsmaterial umfasst, wobei das Verpackungsmaterial einen thermoplastischen monolithischen Film umfasst und eine Wasserdampfdurchlässigkeitsrate von wenigstens 10 g/m².Tag.atm bei 10 °C und 85 % relativer Feuchtigkeit und eine Sauerstoffdurchlässigkeit von höchstens 100 cc/m².Tag.atm bei 10 °C und 85 % relativer Feuchtigkeit aufweist, zum Verbessern der Haltbarkeit der von oberflächen- oder schimmelgereiften Käsesorten.

2. Verwendung gemäß Anspruch 1, **dadurch gekennzeichnet, dass** das Verpackungsmaterial eine Wasserdampfdurchlässigkeitsrate von wenigstens 30 g/m².Tag.atm bei 10 °C und 85 % relativer Feuchtigkeit aufweist.

3. Verwendung gemäß Anspruch 1 oder 2, **dadurch gekennzeichnet, dass** das Verpackungsmaterial eine Wasserdampfdurchlässigkeitsrate von höchstens 75 g/m².Tag.atm bei 10 °C und 85 % relativer Feuchtigkeit aufweist.

4. Verwendung gemäß einem der Ansprüche 1 bis 3, **dadurch gekennzeichnet, dass** das Verpackungsmaterial eine Sauerstoffdurchlässigkeit von höchstens 75 cc/m².Tag.atm bei 10 °C und 85 % relativer Feuchtigkeit aufweist.

5. Verwendung gemäß einem der Ansprüche 1 bis 4, **dadurch gekennzeichnet, dass** das Verpackungsmaterial eine Sauerstoffdurchlässigkeit von höchstens 40 cc/m².Tag.atm bei 10 °C und 85 % relativer Feuchtigkeit aufweist.

6. Verwendung gemäß einem der Ansprüche 1 bis 5, **dadurch gekennzeichnet, dass** die thermoplastischen Polymere in dem thermoplastischen Film im Wesentlichen aus Polyamid und Polyetherester und/oder Polyetheramid bestehen.

7. Verwendung gemäß Anspruch 6, **dadurch gekennzeichnet, dass** der Ethergehalt in dem thermoplastischen Film wenigstens 1 Gew.-% beträgt (bezogen auf die Gesamtmenge an thermoplastischen Polymeren in dem thermoplastischen Film).

8. Verwendung gemäß einem der Ansprüche 1 bis 7, **dadurch gekennzeichnet, dass** das Verpackungsmaterial ein Beutel, eine Abdeckschicht eines Behälters oder einer Schale, ein Fleck, ein Etikett, ein Falteinschlagformat ist.

9. Verwendung gemäß einem der Ansprüche 1 bis 8, **dadurch gekennzeichnet, dass** die Dicke des Verpackungsmaterials wenigstens 15 µm beträgt.

## Revendications

1. Utilisation d'un système de conditionnement comprenant un matériau de conditionnement, ledit matériau de conditionnement comprenant un film thermoplastique d'un seul tenant et présentant un coefficient de transmission de la vapeur d'eau d'au moins 10 g/m².jour.atm à 10 °C et une humidité relative de 85 % et une perméabilité à l'oxygène d'au plus 100 cc/m².jour.atm à 10 °C et une humidité relative de 85 % afin d'améliorer la durée de conservation de variétés de fromage affinées en surface ou affinées aux moisissures.

2. Utilisation selon la revendication 1, **caractérisée en ce que** le matériau de conditionnement présente un coefficient de transmission de la vapeur d'eau d'au moins 30 g/m².jour.atm à 10 °C et une humidité relative de 85 %.

3. Utilisation selon la revendication 1 ou 2, **caractérisée en ce que** le matériau de conditionnement présente un coefficient de transmission de la vapeur d'eau d'au plus 75 g/m².jour.atm à 10 °C et une humidité relative de 85 %.

4. Utilisation selon l'une quelconque des revendications 1 à 3, **caractérisée en ce que** le matériau de conditionnement présente une perméabilité à l'oxygène d'au plus 75 cc/m².jour.atm à 10 °C et une humidité relative de 85 %.

5. Utilisation selon l'une quelconque des revendications 1 à 4, **caractérisée en ce que** le matériau de conditionnement présente une perméabilité à l'oxygène d'au plus 40 cc/m².jour.atm à 10 °C et une humidité relative de 85 %.

6. Utilisation selon l'une quelconque des revendications 1 à 5, **caractérisée en ce que** les polymères thermoplastiques dans le film thermoplastique sont essentiellement constitués de polyamide et de polyétherester et/ou de polyétheramide.

7. Utilisation selon la revendication 6, **caractérisée en ce que** la teneur en éther dans le film thermoplastique est d'au moins 1 % en poids (par rapport à la quantité totale de polymères thermoplastiques dans le film thermoplastique).

8. Utilisation selon l'une quelconque des revendications 1 à 7, **caractérisée en ce que** le matériau de conditionnement est un sac, une couche de revêtement d'un récipient ou une barquette, un timbre, une étiquette ou un format d'emballage tubulaire.

9. Utilisation selon l'une quelconque des revendications 1 à 8, **caractérisée en ce que** l'épaisseur du matériau de conditionnement est d'au moins 15 µm.
